# EUROPÄISCHE PATENTSCHRIFT

(11) **EP 1 306 885 B1**
(45) Veröffentlichungstag und Bekanntmachung des Hinweises auf die Patenterteilung: **30.04.2008**
(21) Anmeldenummer: 02022653.6
(22) Anmeldetag: 09.10.2002
(51) Int. Cl.: H01J 61/44, C09K 11/80, C09K 11/81, C09K 11/78

(54) **Leuchtstoffzusammensetzung für Niederdruckenladungslampen**
Phosphor composition for low-pressure discharge lamp
Composition de phosphore pour lampe à décharge à faible pression

(30) Priorität: 23.10.2001 DE 10152217
(43) Veröffentlichungstag der Anmeldung: 02.05.2003
(73) Patentinhaber: Patent-Treuhand-Gesellschaft für elektrische Glühlampen mbH, 81543 München (DE)
(72) Erfinder: Gruber, Wolfgang, 86169 Augsburg (DE); Schiplage, Matthias, 86316 Friedberg (DE); Zachau, Martin, Dr., 82269 Geltendorf (DE)
(74) Vertreter: Raiser, Franz

(56) Entgegenhaltungen:
- EP-A- 0 594 424
- EP-A- 0 762 474
- EP-A- 0 993 022
- US-A- 5 838 101
- PATENT ABSTRACTS OF JAPAN Bd. 011, Nr. 169 (E-511), 30. Mai 1987 (1987-05-30) & JP 62 002444 A (MATSUSHITA ELECTRONICS CORP), 8. Januar 1987 (1987-01-08)

## Beschreibung

### Technisches Gebiet

Die Erfindung geht aus von einer Leuchtstoffzusammensetzung gemäß dem Oberbegriff des Anspruchs 1. Es handelt sich dabei insbesondere um eine Leuchtstoffzusammensetzung zur Erzeugung von Licht mit einer Farbtemperatur von größer 5000 K und einem sehr guten allgemeinen Farbwiedergabeindex Ra von größer 90, wobei die Leuchtstoffzusammensetzung einen Halophosphat-Leuchtstoff, einen im roten Wellenlängenbereich emittierenden Leuchtstoff und einen im blaugrünen Wellenlängenbereich emittierenden Leuchtstoff beinhaltet.

### Stand der Technik

Neben der Anforderung nach einer sehr guten Farbwiedergabe muss hierbei auch der Lichtstrom möglichst hoch sein. Die Schwierigkeit liegt nun darin, dass hoher Lichtstrom und sehr gute Farbwiedergabe gegenläufige Anforderungen sind, weil ein hoher Lichtstrom eine maximale Lichtintensität im Grünen fordert, gute Farbwiedergabe aber eine der Schwarzkörperstrahlung ähnliche Verteilung der Lichtintensität auf allen Wellenlängen voraussetzt und somit der ersten Forderung entgegensteht.

### Darstellung der Erfindung

Es ist Aufgabe der vorliegenden Erfindung, eine Leuchtstoffzusammensetzung gemäß dem Oberbegriff des Anspruchs 1 bereitzustellen, mit der sich bei Niederdruckentladungslampen maximale Lichtausbeuten bei gleichzeitig sehr gutem allgemeinen Farbwiedergabeindex Ra von größer 90 erzielen lassen. Die Leuchtstoffzusammensetzung sollte dabei außerdem in einer Schicht auf das Entladungsgefäß aufbringbar sein.

Diese Aufgabe wird bei einer Leuchtstoffzusammensetzung mit den Merkmalen des Oberbegriffs des Anspruchs 1 durch die Merkmale des kennzeichnenden Teils des Anspruchs 1 gelöst. Besonders vorteilhafte Ausgestaltungen finden sich in den abhängigen Ansprüchen.

Durch die zusätzliche Verwendung eines mit Eu dotierten Bariummagnesiumaluminat-Leuchtstoffs BaMgAl₁₀O₁₇:Eu und eines mit Tb dotierten grün emittierenden Leuchtstoffs in der Leuchtstoffzusammensetzung werden die geforderten Merkmale erfüllt, wobei der im blaugrünen Wellenlängenbereich emittierende Leuchtstoff ein mit Eu dotiertes Strontiumaluminat Sr₄Al₁₄O₂₅:Eu sein sollte.

Als Stand der Technik ist hierzu aus der EP-A-0 594 424 eine Niederdruckentladungslampe mit einer Leuchtstoffbeschichtung bekannt, wobei letztere aus einem Calciumhalophosphat der Summenformel Ca(PO₄)(F,Cl):Sb,Mn und einer Quad-Phosphor-Schicht besteht. Die Quad-Phosphor-Schicht besteht dabei aus einem rot, blau und grün emittierenden Leuchtstoff sowie aus einem weiteren Leuchtstoff. Neben dem blau emittierenden Leuchtstoff in Form eines mit Eu dotierten Bariummagnesiumaluminat-Leuchtstoffs setzt sie sich aus einem typisch grün emittierenden, mit Terbium aktivierten Cermagnesiumaluminat-Leuchtstoff und als vierte Komponente aus einem mit Mn dotierten Magnesiumgallat-Leuchtstoff, der im blaugrünen Wellenlängenbereich emittiert, zusammen.

Vorteilhaft liegt bei der Erfindung der Gewichtsanteil des mit Eu dotierten Bariummagnesiumaluminat-Leuchtstoffs BaMgAl₁₀O₁₇:Eu an der gesamten Leuchtstoffzusammensetzung zwischen 1% und 20% besser zwischen 3% und 15%.

Als mit Tb dotierter grün emittierende Leuchtstoff eignet sich insbesondere ein mit Tb dotierter Cermagnesiumaluminat-Leuchtstoff CeMgAl₁₁O₁₉:Tb. Der Gewichtsanteil des mit Tb dotierten Cermagnesiumaluminat-Leuchtstoffs CeMgAl₁₁O₁₉:Tb an der gesamten Leuchtstoffzusammensetzung sollte dabei zwischen 1% und 20%, vorteilhaft zwischen 2% und 15% liegen.

Zur weiteren Verbesserung der Farbwiedergabe sollte der im blaugrünen Strahlungsbereich emittierende und mit Eu dotierte Strontiumaluminat-Leuchtstoff Sr₄Al₁₄O₂₅:Eu vorteilhaft einen Gewichtsanteil an der gesamten Leuchtstoffzusammensetzung zwischen 10% und 50%, besser zwischen 20% und 40% haben.

Weitere Verbesserungen in Bezug auf die Farbwidergabe können durch Zugabe eines mit Mn dotierten Cergadoliniumzinkmagnesiumpentaborat-Leuchtstoffs (Ce,Cd)(Zn,Mg)B₅O₁₀:Mn für den in roten Strahlungsbereich emittierender Leuchtstoff erreicht werden, wobei dieser Leuchtstoff einen Anteil von 5% bis 60%, besser von 10% bis 40% an der gesamten Leuchtstoffzusammensetzung haben sollte.

Als Halophosphat-Leuchtstoff für die hier geforderten Merkmale eignet sich insbesondere ein mit Mn dotierter Calciumhalophosphat-Leuchtstoff Ca₅(PO₄)₃(F,Cl):Sb,Mn.

Zusätzlich kann die Leuchtstoffzusammensetzung einen oder mehrere Leuchtstoffe enthalten, die im nicht sichtbaren Spektralbereich emittieren. Dadurch lässt sich mit der Leuchtstoffzusammensetzung das Spektrum der Sonne hinsichtlich seines UV-Anteils annähern.

Die Leuchtstoffzusammensetzung ist bevorzugt in Form einer einzigen Leuchtstoffmischung auf der Innenseite des Entladungsgefäßes aufgebracht und besteht dabei aus einer einzigen Schicht.

Es kann aber auch von Vorteil sein, die Leuchtstoffbeschichtung in Form von zwei Schichten aufzubringen, wobei die der Innenseite des Entladungsgefäßes zugewandte Unterschicht nur aus dem Halophosphatleuchtstoff besteht. Die der Entladung zugewandte Deckschicht sollte dann ebenfalls den Halophosphatleuchtstoff und die anderen Leuchtstoffe der Leuchtstoffmischung enthalten.

Zusätzlich sollte zwischen der Innenseite des Entladungsgefäßes und der Leuchtstoffschicht eine Schutzschicht aus Al₂O₃, Y₂O₃ oder einem Seltenerdoxid aufgebracht sein.

### Beschreibung der Zeichnungen

Im folgenden soll die Erfindung anhand eines Ausführungsbeispiels näher erläutert werden.

In der nachfolgenden Figur ist das Spektrum einer Leuchtstofflampe mit einer Leuchtstoffbeschichtung dargestellt, wobei sich die Beschichtung aus einer Leuchtstoffmischung mit folgenden Bestandteilen in Gew.% zusammensetzt :

| | |
|---|---|
| Sr₄Al₁₄O₂₅:Eu | 28,5 Gew.% |
| (Ce,Gd)(Zn,Mg)B₅O₁₀:Mn | 28,5 Gew.% |
| Ca₅(PO₄)₃(F,Cl):Sb,Mn | 26,9 Gew.% |
| BaMgAl₁₀O₁₇:Eu | 6,1 Gew.% |
| CeMgAl₁₁O₁₉:Tb | 10,0 Gew.% |

Die Intensität I (maximale Intensität auf 1 genormt) der Strahlung ist hierbei in Abhängigkeit von der Wellenlänge λ in nm in 5 nm-Schritten aufgezeigt. Mit dieser Leuchtstoffmischung ist eine hohe Lichtausbeute von 62 lm/W erreichbar. Keiner der speziellen Farbwiedergabefaktoren R1 bis R16 weist einen Wert kleiner gleich 92 auf, wobei sich ein allgemeiner Farbwiedergabefaktor Ra8 für die ersten acht Wiedergabefaktoren R1 bis R8 von 96,3 und Ra14 für die ersten vierzehn Wiedergabefaktoren R1 bis R14 von 95,9 ergibt. Die Koordinaten des Farborts für diese Leuchtstoffmischung betragen x = 0,334 und y = 0,351.

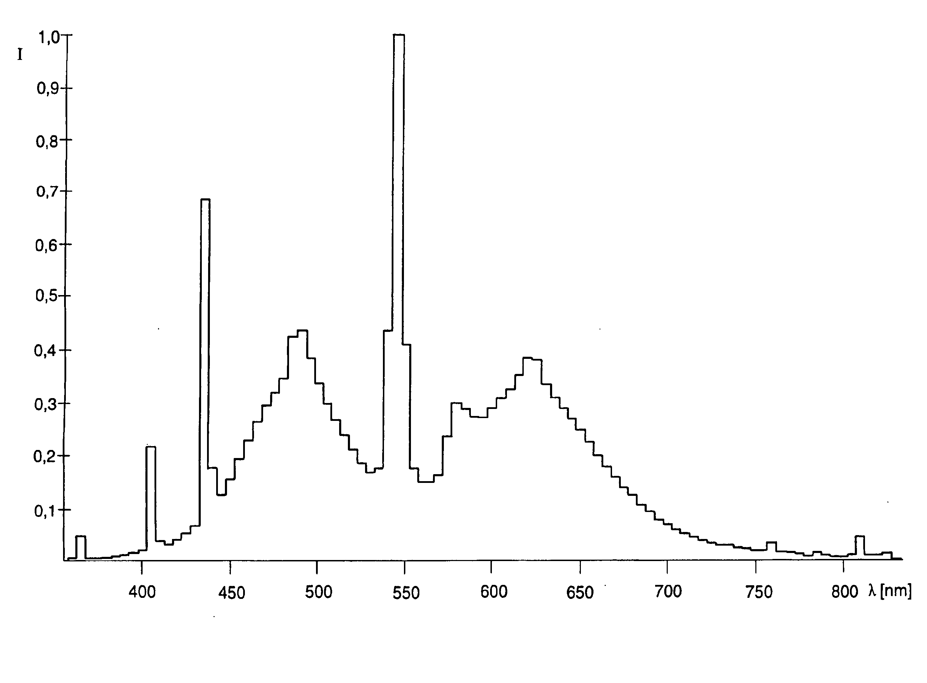

## Patentansprüche

1. Leuchtstoffzusammensetzung für Niederdruckentladungslampen mit hoher Lichtausbeute zur Erzeugung von Strahlung mit einer Farbtemperatur von größer 5000 K und einem sehr guten allgemeinen Farbwiedergabeindex Ra größer 90, wobei die Leuchtstoffzusammensetzung zumindest einen Halophosphat-Leuchtstoff, einen im roten Wellenlängenbereich emittierenden Leuchtstoff sowie einem im blaugrünen Wellenlängenbereich emittierenden Leuchtstoff beinhaltet, **dadurch gekennzeichnet, dass** der im blaugrünen Wellenlängenbereich emittierende Leuchtstoff ein mit Eu dotiertes Strontiumaluminat Sr₄Al₁₄O₂₅:Eu ist und die Leuchtstoffzusammensetzung zusätzlich einen mit Eu dotierten Bariummagnesiumaluminat-Leuchtstoff BaMgAl₁₀O₁₇:Eu und einem mit Tb dotierten grün emittierenden Leuchtstoff beinhaltet.

2. Leuchtstoffzusammensetzung nach Anspruch 1, **dadurch gekennzeichnet, dass** der Gewichtsanteil des mit Eu dotierten Bariummagnesiumaluminat-Leuchtstoffs BaMgAl₁₀O₁₇:Eu an der gesamten Leuchtstoffzusammensetzung zwischen 1% und 20% liegt.

3. Leuchtstoffzusammensetzung nach Anspruch 1, **dadurch gekennzeichnet, dass** der Gewichtsanteil des mit Eu dotierten Bariummagnesiumaluminat-Leuchtstoffs BaMgAl₁₀O₁₇:Eu an der gesamten Leuchtstoffzusammensetzung zwischen 3% und 15% liegt.

4. Leuchtstoffzusammensetzung nach Anspruch 1, **dadurch gekennzeichnet, dass** der Gewichtsanteil des mit Eu dotierten Strontiumaluminat-Leuchtstoffs Sr₄Al₁₄O₂₅:Eu an der gesamten Leuchtstoffzusammensetzung zwischen 10% und 50% liegt.

5. Leuchtstoffzusammensetzung nach Anspruch 1, **dadurch gekennzeichnet, dass** der Gewichtsanteil des mit Eu dotierten Strontiumaluminat-Leuchtstoffs Sr₄Al₁₄O₂₅:Eu an der gesamten Leuchtstoffzusammensetzung zwischen 20% und 40% beträgt.

6. Leuchtstoffzusammensetzung nach Anspruch 1, **dadurch gekennzeichnet, dass** der mit Tb dotierte grün emittierende Leuchtstoff ein mit Tb dotierter Cermagnesiumaluminat-Leuchtstoff CeMgAl₁₁O₁₉:Tb ist.

7. Leuchtstoffzusammensetzung nach Anspruch 6, **dadurch gekennzeichnet, dass** der Gewichtsanteil des mit Tb dotierten Cermagnesiumaluminat-Leuchtstoffs CeMgAl₁₁O₁₉:Tb an der gesamten Leuchtstoffzusammensetzung zwischen 1% und 20% liegt.

8. Leuchtstoffzusammensetzung nach Anspruch 6, **dadurch gekennzeichnet, dass** der Gewichtsanteil des mit Tb dotierten Cermagnesiumaluminat-Leuchtstoffs CeMgAl₁₁O₁₉:Tb an der gesamten Leuchtstoffzusammensetzung zwischen 2% und 15% liegt.

9. Leuchtstoffzusammensetzung nach Anspruch 1, **dadurch gekennzeichnet, dass** die Leuchtstoffzusammensetzung für den im roten Spektralbereich emittierenden Leuchtstoff einen mit Mn dotierten Cergadoliniumzinkmagnesiumpentaborat-Leuchtstoff (Ce,Gd)(Zn,Mg)B₅O₁₀:Mn beinhaltet.

10. Leuchtstoffzusammensetzung nach Anspruch 9, **dadurch gekennzeichnet, dass** der Gewichtsanteil des mit Mn dotierten Cergadoliniumzinkmagnesiumpentaborat-Leuchtstoffs (Ce,Gd)(Zn,Mg)B₅O₁₀:Mn an der gesamten Leuchtstoffzusammensetzung zwischen 5% und 60% liegt.

11. Leuchtstoffzusammensetzung nach Anspruch 9, **dadurch gekennzeichnet, dass** der Gewichtsanteil des mit Mn dotierten Cergadoliniumzinkmagnesiumpentaborat-Leuchtstoffs (Ce,Gd)(Zn,Mg)B₅O₁₀:Mn an der gesamten Leuchtstoffzusammensetzung zwischen 10% und 40% liegt.

12. Leuchtstoffzusammensetzung nach einem der vorstehenden Ansprüche, **dadurch gekennzeichnet, dass** die Leuchtstoffzusammensetzung als Halophosphat-Leuchtstoff einen mit Sb und Mn dotierten Calciumhalophosphat-Leuchtstoff Ca₅(PO₄)₃(F,Cl):Sb,Mn beinhaltet.

13. Leuchtstoffzusammensetzung nach einem der vorstehenden Ansprüche, **dadurch gekennzeichnet, dass** die Leuchtstoffzusammensetzung zusätzlich einen oder mehrere Leuchtstoffe enthält, die im nicht sichtbaren Spektralbereich emittieren.

14. Niederdruckentladungslampe mit einer auf der Innenseite des Entladungsgefäßes aufgebrachten Leuchtstoffbeschichtung, **dadurch gekennzeichnet, dass** die Leuchtstoffbeschichtung aus einer Leuchtstoffzusammensetzung gemäß einem oder mehreren der Ansprüche 1 bis 13 besteht.

15. Niederdruckentladungslampen nach Anspruch 14, **dadurch gekennzeichnet, dass** die Leuchtstoffzusammensetzung in Form einer einzigen Leuchtstoffmischung auf den Innenseite des Entladungsgefäßes aufgebracht ist.

16. Niederdruckentladungslampe nach Anspruch 14, **dadurch gekennzeichnet, dass** die Leuchtstoffbeschichtung aus einer einzigen Schicht besteht.

17. Niederdruckentladungslampe nach Anspruch 14, **dadurch gekennzeichnet, dass** die Leuchtstoffbeschichtung aus zwei Schichten besteht, wobei die der Innenseite des Entladungsgefäßes zugewandte Unterschicht nur aus dem Halophosphatleuchtstoff besteht, die der Entladung zugewandte Deckschicht den Halophosphatleuchtstoff und die anderen Leuchtstoffe der Leuchtstoffmischung enthält.

18. Niederdruckentladungslampe nach Anspruch 14, **dadurch gekennzeichnet, dass** zwischen der Innenseite des Entladungsgefäßes und der Leuchtstoffschicht eine Schutzschicht aus Al₂O₃, Y₂O₃ oder einem Seltenerdoxid aufgebracht ist.

## Claims

1. Phosphor composition for low-pressure gas discharge lamps with a high light efficiency for generating radiation with a color temperature of greater than 5000 K and a very good general color rendering index Ra of greater than 90, the phosphor composition containing at least one halophosphate phosphor, a phosphor which emits in the red wavelength region as well as a phosphor which emits in the blue-green wavelength region, **characterized in that** the phosphor which emits in the blue-green wavelength region is an Eu-doped strontium aluminate Sr₄Al₁₄O₂₅:Eu and the phosphor composition additionally contains an Eu-doped barium magnesium aluminate phosphor BaMgAl₁₀O₁₇:Eu and a Tb-doped green-emitting phosphor.

2. Phosphor composition according to claim 1, **characterized in that** the proportion by weight of the Eu-doped barium magnesium aluminate phosphor BaMgAl₁₀O₁₇:Eu in the overall phosphor composition is between 1% and 20%.

3. Phosphor composition according to claim 1, **characterized in that** the proportion by weight of the Eu-doped barium magnesium aluminate phosphor BaMgAl₁₀O₁₇:Eu in the overall phosphor composition is between 3% and 15%.

4. Phosphor composition according to claim 1, **characterized in that** the proportion by weight of the Eu-doped strontium aluminate phosphor Sr₄Al₁₄O₂₅:Eu in the overall phosphor composition is between 10% and 50%.

5. Phosphor composition according to claim 1, **characterized in that** the proportion by weight of the Eu-doped strontium aluminate phosphor Sr₄Al₁₄O₂₅:Eu in the overall phosphor composition is between 20% and 40%.

6. Phosphor composition according to claim 1, **characterized in that** the Tb-doped green-emitting phosphor is a Tb-doped cerium magnesium aluminate phosphor CeMgAl₁₁O₁₉:Tb.

7. Phosphor composition according to claim 6, **characterized in that** the proportion by weight of the Tb-doped cerium magnesium aluminate phosphor CeMgAl₁₁O₁₉:Tb in the overall phosphor composition is between 1% and 20%.

8. Phosphor composition according to claim 6, **characterized in that** the proportion by weight of the Tb-doped cerium magnesium aluminate phosphor CeMgAl₁₁O₁₉:Tb in the overall phosphor composition is between 2% and 15%.

9. Phosphor composition according to claim 1, **characterized in that** the phosphor composition contains, for the phosphor which emits in the red spectral region, an Mn-doped cerium gadolinium zinc magnesium pentaborate phosphor (Ce,Gd) (Zn,Mg)B₅O₁₀:Mn.

10. Phosphor composition according to claim 9, **characterized in that** the proportion by weight of the Mn-doped cerium gadolinium zinc magnesium pentaborate phosphor (Ce,Gd) (Zn,Mg)B₅O₁₀:Mn in the overall phosphor composition is between 5% and 60%.

11. Phosphor composition according to claim 9, **characterized in that** the proportion by weight of the Mn-doped cerium gadolinium zinc magnesium pentaborate phosphor (Ce,Gd) (Zn,Mg)B₅O₁₀:Mn in the overall phosphor composition is between 10% and 40%.

12. Phosphor composition according to one of the preceding claims, **characterized in that** the phosphor composition, as halophosphate phosphor, contains an Sb- and Mn-doped calcium halophosphate phosphor Ca₅(PO₄)₃(F,Cl) : Sb, Mn.

13. Phosphor composition according to one of the preceding claims, **characterized in that** the phosphor composition additionally contains one or more phosphors which emit in the invisible spectral region.

14. Low-pressure gas discharge lamp having a phosphor coating applied to the inner side of the discharge vessel, **characterized in that** the phosphor coating consists of a phosphor composition according to one or more of claims 1 to 13.

15. Low-pressure gas discharge lamp according to claim 14, **characterized in that** the phosphor composition is applied to the inner side of the discharge vessel in the form of a single phosphor mixture.

16. Low-pressure gas discharge lamp according to claim 14, **characterized in that** the phosphor coating comprises a single layer.

17. Low-pressure gas discharge lamp according to claim 14, **characterized in that** the phosphor coating comprises two layers, the lower layer, which faces the inner side of the discharge vessel, consisting only of the halophosphate phosphor, while the covering layer, which faces the discharge, contains the halophosphate phosphor and the other phosphors of the phosphor mixture.

18. Low-pressure gas discharge lamp according to claim 14, **characterized in that** a protective layer comprising Al₂O₃, Y₂O₃ or a rare-earth oxide is applied between the inner side of the discharge vessel and the phosphor layer.

## Revendications

1. Composition de substance luminescente pour des lampes à décharge à basse pression ayant un grand rendement lumineux pour la production de rayonnement ayant une température de couleur supérieure à 5 000 K et un très bon indice général de rendu de couleur Ra supérieur à 90, la composition de substance luminescente contenant au moins une substance luminescente à l'halogénophosphate, une substance luminescente émettant dans le domaine rouge des longueurs d'ondes ainsi qu'une substance luminescente émettant dans le domaine bleu-vert des longueurs d'ondes, **caractérisée en ce que** la substance luminescente émettant dans le domaine bleu-vert des longueurs d'ondes est un aluminate de strontium dopé à l'Eu, Sr₄Al₁₄O₂₅:Eu, et la composition de substance luminescente contient en plus une substance luminescente à l'aluminate de baryum et de magnésium dopée à l'Eu, BaMgAl₁₀O₁₇:Eu, et une substance luminescente émettant dans le vert et dopée au Tb.

2. Composition de substance luminescente suivant la revendication 1, **caractérisée en ce que** la proportion en poids de la substance luminescente à l'aluminate de baryum et de magnésium dopée à l' Eu, BaMgAl₁₀O₁₇:Eu, représente entre 1 % et 20 % de la composition totale de substance luminescente.

3. Composition de substance luminescente suivant la revendication 1, **caractérisée en ce que** la proportion en poids de la substance luminescente à l'aluminate de baryum et de magnésium dopée à l' Eu, BaMgAl₁₀O₁₇:Eu, représente entre 3 % et 15 % de la composition totale de substance luminescente.

4. Composition de substance luminescente suivant la revendication 1, **caractérisée en ce que** la proportion en poids de la substance luminescente à l'aluminate de strontium dopée à l'Eu, Sr₄Al₁₄O₂₅:Eu, représente entre 10 % et 50 % de la composition totale de substance luminescente.

5. Composition de substance luminescente suivant la revendication 1, **caractérisée en ce que** la proportion en poids de la substance luminescente à l'aluminate de strontium dopée à l'Eu, Sr₄Al₁₄O₂₅₁Eu, représente entre 20 % et 40 % de la composition totale de substance luminescente.

6. Composition de substance luminescente suivant la revendication 1, **caractérisé en ce que** la substance luminescente émettant dans le vert et dopée au Tb est une substance luminescente à l'aluminate de cérium et de magnésium dopée au Tb, CeMgAl₁₁O₁₉:Tb.

7. Composition de substance luminescente suivant la revendication 6, **caractérisée en ce que** la proportion en poids de la substance luminescente à l'aluminate de cérium et de magnésium dopée au Tb, CeMgAl₁₁O₁₉:Tb représente entre 1 % et 20 % de la composition totale de substance luminescente.

8. Composition de substance luminescente suivant la revendication 6, **caractérisée en ce que** la proportion en poids de la substance luminescente à l'aluminate de cérium et de magnésium dopée au Tb, CeMgAl₁₁O₁₉:Tb représente entre 2 % et 15 % de la composition totale de substance luminescente.

9. Composition de substance luminescente suivant la revendication 1, **caractérisée en ce que** composition de substance luminescente pour la substance luminescente émettant dans le domaine spectral rouge contient une substance luminescente au pentaborate de cérium, de gadolinium, de zinc et de magnésium dopée au Mn, (Ce,Gd)(Zn,Mg)B₅O₁₀:Mn.

10. Composition de substance luminescente suivant la revendication 9, **caractérisée en ce que** la proportion en poids de la substance luminescente au pentaborate de cérium, de gadolinium, de zinc et de magnésium dopée au Mn, (Ce, Gd) (Zn,Mg)B₅O₁₀:Mn, représente entre 5 % et 60 % de la composition totale de substance luminescente.

11. Composition de substance luminescente suivant la revendication 9, **caractérisée en ce que** la proportion en poids de la substance luminescente au pentaborate de cérium, de gadolinium, de zinc et de magnésium dopée au Mn, (Ce, Gd) (Zn, Mg)B₅O₁₀:Mn, représente entre 10 % et 40 % de la composition totale de substance luminescente.

12. Composition de substance luminescente suivant l'une des revendications précédentes, **caractérisée en ce que** la composition de substance luminescente contient sous la forme d'une substance luminescente à l'halogénophosphate une substance luminescente à l'halogénophosphate de calcium dopée au Sb et au Mn, Ca₅(PO₄)₃(F,Cl):Sb, Mn.

13. Composition de substance luminescente suivant l'une des revendications précédentes, **caractérisée en ce que** la composition de substance luminescente contient en outre une ou plusieurs substances luminescentes qui n'émettent pas dans le domaine visible du spectre.

14. Lampe à décharge à basse pression ayant un revêtement de substance luminescente déposé sur la face intérieure de l'enceinte de décharge, **caractérisée en ce que** le revêtement de substance luminescente est constitué d'une composition de substance luminescente suivante l'une ou plusieurs des revendications 1 à 13.

15. Lampe à décharge à basse pression suivant la revendication 14, **caractérisée en ce que** la composition de substance luminescente est déposée sous la forme d'un mélange unique de substance luminescente sur la face intérieure de l'enceinte de décharge.

16. Lampe à décharge à basse pression suivant la revendication 14, **caractérisée en ce que** le revêtement de substance luminescente est constitué d'une couche unique.

17. Lampe à décharge à basse pression suivant la revendication 14, **caractérisée en ce que** le revêtement de substance luminescente est constitué de deux couches, la couche inférieure tournée vers la face intérieure de l'enceinte de décharge n'étant constituée que de la substance luminescente à l'halogénophosphate, tandis que la couche de finition tournée vers la décharge contient la substance luminescente à l'halogénophosphate et les autres substances luminescentes du mélange de substances luminescentes.

18. Lampe à décharge à basse pression suivant la revendication 14, **caractérisée en ce qu'**une couche de protection en Al₂O₃, Y₂O₃ ou en un oxyde des terres rares est déposée entre la face intérieure de l'enceinte de décharge et la couche de substance luminescente.
